(19) Europäisches Patentamt
European Patent Office
Office européen des brevets

(11) Veröffentlichungsnummer: **0 062 820**
**B1**

(12) **EUROPÄISCHE PATENTSCHRIFT**

(45) Veröffentlichungstag der Patentschrift: **20.05.87**

(51) Int. Cl.⁴: **C 08 J 5/18,** C 08 L 77/02

(21) Anmeldenummer: **82102611.9**

(22) Anmeldetag: **29.03.82**

(54) **Polyamidfolien und Verfahren zu ihrer Herstellung.**

(30) Priorität: **09.04.81 DE 3114390**

(43) Veröffentlichungstag der Anmeldung: **20.10.82 Patentblatt 82/42**

(45) Bekanntmachung des Hinweises auf die Patenterteilung: **20.05.87 Patentblatt 87/21**

(84) Benannte Vertragsstaaten: **CH DE FR GB IT LI NL**

(56) Entgegenhaltungen:
**DE-B-1 061 063**
**DE-B-1 212 722**
**DE-B-1 225 382**
**FR-A-1 461 875**
**US-A-4 200 707**

(73) Patentinhaber: **BAYER AG, Konzernverwaltung RP Patentabteilung, D-5090 Leverkusen 1 Bayerwerk (DE)**

(72) Erfinder: **Hermann, Karl Heinz, Dr., Scheiblerstrasse 111, D-4150 Krefeld (DE)**
Erfinder: **Schulte, Helmut, Horstdyk 73a, D-4150 Krefeld (DE)**
Erfinder: **Nielinger, Werner, Dr., Bärenstrasse 21, D-4150 Krefeld (DE)**
Erfinder: **Michael, Dietrich, Dr., Deswatinesstrasse 57, D-4150 Krefeld (DE)**

**EP 0 062 820 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Folien aus Polyamiden, insbesondere aus Poly- ε-Caprolactam oder Copolyamiden auf Basis von ε-Caprolactam, zeichnen sich durch eine Reihe hervorragender Eigenschaften aus. Sie besitzen eine hohe mechanische Festigkeit, hohe Transparenz und Brillanz. Weiterhin sind sie fett-, öl- und kältebeständig und finden aufgrund dieser vorteilhaften Eigenschaften einen vielfältigen Einsatz bei der Herstellung von Verpackungsmaterialien.

Aus wirtschaftlichen Gründen besteht großes Interesse, extrem dünne Polyamidfolien, nämlich solche, mit einer Dicke im Bereich von 10 - 30 µm, herzustellen. Nach dem bisher üblichen Verfahren (DOS 2 450 776), können nur Folien mit einer Mindestdicke von 25 µm produktionstechnisch einwandfrei hergestellt werden. Dies ist jedoch auch nur bei einer relativ geringen Abzugsgeschwindigkeit von max. 50 m/min möglich.

Es wurde nun überraschend gefunden, daß es gelingt, Polyamidfolien mit einer Dicke von 10-50 µm, vorzugsweise 15-25 µm nach dem Folienextrusionsverfahren mit Abzugsgeschwindigkeiten oberhalb 50 m/min herzustellen, indem man Polyamid-6 oder Copolyamide, die zumindest aus 80 Gew.-%ε -Caprolactameinheiten bestehen, mit 0,001-0,2 Gew.-%, bezogen auf das Polyamid, vorzugsweise 0,002 - 0,1 Gew.-% einer Dispersion mischt, die aus

1) 1 - 50 Gew.-%, bezogen auf die Gesamtdispersion, vorzugsweise 2 - 40 Gew.-%, mindestens eines festen anorganischen Nucleierungsmittels für Polyamide mit einer Teilchengröße < 25 µm und aus

2) 50 - 99 Gew.-%, bezogen auf die Gesamtdispersion, vorzugsweise 60 - 98 Gew.-%, mindestens eines flüssigen, für das Nucleierungsmittel geeigneten, organischen Dispergiermittels aus der Gruppe Polyalkylenglykole, Paraffinöle, Carbonsäureester, Organopolysiloxane, oxalkylierte Fettalkohole, oxakylierte Alkylphenole, oxalkylierte Fettsäuren, oxalkylierte Fettsäuren, oxalkylierte Fellsäureamide und oxalkylierte Fettamine besteht.

Es war zwar aus der Fr-A-1461 875 bereits bekannt, mit Dispersionen von Nucleierungsmitteln in Wasser oder Methanol ein verbessertes Nucleierungsverhalten zu erreichen; für das erfindungsgemäße Folienextrusionsverfahren sind solche Dispersionen überhaupt nicht geeignet, da bei den hohen Verarbeitungstemperaturen in Gegenwart von Wasser mit einem Molekulargewichtsabbau des Polyamids und einer verstärkten Monomerbildung gerechnet werden muß.

Geeignete anorganische Nucleierungsmittel sind solche, die bereits zur Nucleierung von Polyamiden bekannt sind, wie z. B. Bariumsulfat, Tricalciumphosphat, $CaF_2$ und Talkum. Die Nucleierungsmittel haben eine Teilchengröße von weniger als 25 µm, vorzugsweise von weniger als 20 µm.

Beispiele für geeignete Dispergiermittel sind

a) Polyalkylenglykole der allgemeinen Formel

$$HO-\left[-CH_2-\underset{\displaystyle R}{\underset{|}{CH}}-O-\right]_n-H\ ,$$

in der

R = H oder $-CH_3$ und

n eine ganze Zahl von 3 - 100 bedeuten.

Vorzugsweise wird Polyethylenglykol mit einem MG von 300 - 1000 verwendet.

Weitere geeignete Dispergiermittel sind

b) Paraffinöle oder

c) Ester aus Mono- oder Dicarbonsäuren und monofunktionellen Alkoholen der allgemeinen Formel

$R_1-CO-O-R_2$

oder

$$R_3-O-\overset{O}{\overset{\|}{C}}-R_4-\overset{O}{\overset{\|}{C}}-O-R_5$$

worin

$R_1$, $R_2$, $R_3$ und $R_5$ gesättigte oder ungesättigte Alkylreste mit vorzugsweise 1 - 20 C-Atomen, Cycloalkylreste mit vorzugsweise 5 - 6 C-Atomen, Arylreste mit vorzugsweise 6 - 10 C-Atomen, oder Aralkylreste mit vorzugsweise 7 - 12 C-Atomen,

$R_4$ ein gesättigter oder ungesättigter Alkylenrest mit vorzugsweise 2 - 10 C-Atomen, Cycloalkylenrest mit vorzugsweise 6 - 10 C-Atomen oder Arylenrest mit vorzugsweise 6 - 10 C-Atomen sind,

wobei $R_1$ und/oder $R_2$ bzw. $R_3$ und/oder $R_5$ mindestens 8 miteinander verbundene aliphatische C-Atome enthalten, z.B. Butylstearat, Hexylstearat, Isodecylstearat, Isononylstearat, Benzylstearat, Cyclohexylstearat, Isooctyloleat, Diisooctyladipat, Diisodecylsebazat, Diisooctadecylisophthalat, Methylstearat, Butylpalmitat,

Isononylbehenat, Dodecylacetat, Dodecylbutyrat, Isooctadecylbutyrat, Isooctadecylbenzoat, n-Octadecylbutyrat, n-Octadecylstearat, Isooctadecylstearat, Isooctadecylbehenat, Isooctadecyloleat, Isooctadecyllinolat, Diisooctadecyladiphat, Diisooctadecylsebacat, Diisooctadecylterephthalat, Diisooctadecylsebacat, Diisooctadecylterephthalat, Di-n-octadecyl-adiphat, Di-n-octadecyl-sebacat, Diisodecylphthalat, Diisooctadecylphthalat, Diisooctadecyl-oxalat, Diisooctadecylsuccinat, Di-n-octadecyloxalat, Dekandicarbonsäurediisononylester oder Dekandicarbonsäurediisooctadecylester,

oder Ester aus gesättigten oder ungesättigten aliphatischen Monocarbonsäuren mit mindesten 12 C-Atomen und polyfunktionellen Alkoholen, wie z.B. Hexandiolbis-stearat, Hexantriolmono-oleat, Diethylenglykolbisstearat, Trimethylolpropan-tris-palmitat, Ethylenglykol-bis-stearat, Ethylenglykol-bis-behenat, 2,2-Dimethyl-propandiol-bis-palmitat, 2,2-Dimethyl-propandiol-bis-oleat, Glycerin-tris-stearat, Glycerin-tris-palmitat, Glycerin-tri-behenat, Glycerin-bis-behenat, Trimethylol-propan-bis-behenat, Pentaerythrit-tetrakis-stearat, Pentaerythrit-tri -behenat, Pentaerythrit-bis-behenat, Glycerinmonooleat-bisstearat oder Trimethylolpropanmonooleat -monobehenat.

Außerdem eignen sich als Dispergiermittel

d) lineare Organopolysiloxane der allgemeinen Formel:

$$R_7 - \underset{R_8}{\overset{R_6}{Si}} - O - \left[ - \underset{R_{10}}{\overset{R_9}{Si}} - O - \right]_n - \underset{R_8}{\overset{R_6}{Si}} - R_7 \quad ,$$

in der

$R_6$, $R_7$, $R_8$, $R_9$, $R_{10}$ jedes H, einen Alkylrest mit 1 - 18 C-Atomen, Cycloalkylrest mit 6 - 10 C-Atomen oder Arylrest mit 6 - 10 C-Atomen und n eine ganze Zahl von 50 - 1000 bedeuten, wie z.B. flüssige Polydimethylsiloxane oder Polymethylphenylsiloxane mit einer Viskosität von mind. 100 mpa.s bei 20° C,

der

e) Oxalkylierungsprodukte von Fettalkoholen der allgemeinen Formel

$X_1 - O - (CHX_2 - CHX_3 - O)_x - H$

worin

$X_1$ ein gesättigter oder ungesättigter, vorzugsweise geradkettiger Alkylrest mit mindestens 12 C-Atomen,

$X_2$ Wasserstoff oder ein Alkylrest mit 1 - 3 C-Atomen,

$X_3$ Wasserstoff oder ein Alkylrest mit 1 - 3 C-Atomen und

x eine ganze Zahl von 1 - 50 ist;

oder

f) Oxalkylierungsprodukte von Fettsäuren der allgemeinen Formel

$Y_1 - CO - O - (CHY_2 - CHY_3 - O)_x - H$

worin

$Y_1$ ein gesättigter oder ungesättigter, vorzugsweise geradkettiger Alkylrest mit mindestens 12 C-Atomen,

$Y_2$ Wasserstoff oder ein Alkylrest mit 1 - 3 C-Atomen,

$Y_3$ Wasserstoff oder ein Alkylrest mit 1 - 3 C-Atomen und

x eine ganze Zahl von 1 - 50 ist;

Weiterhin kommen als Dispergiermittel in Frage:

g) Oxalkylierungsprodukte von Alkylphenolen der allgemeinen Formel

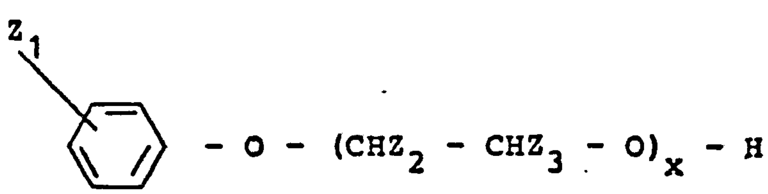

worin

$Z_1$ ein gesättigter oder ungesättigter Alkylrest mit mindestens 9 C-Atomen,

$Z_2$ Wasserstoff oder ein Alkylrest mit 1 - 3 C-Atomen,

$Z_3$ Wasserstoff oder ein Alkylrest mit 1 - 3 C-Atomen und

x eine ganze Zahl von 1 - 50 ist;

oder

h) Oxalkylierungsprodukte von Fettsäureamiden der allgemeinen Formel

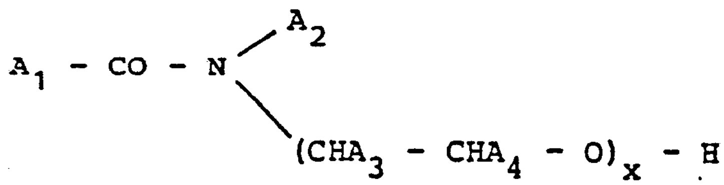

worin

$A_1$ ein gesättigter oder ungesättigter, vorzugsweise geradkettiger Alkylrest mit mind. 12 C-Atomen,

$A_2$ Wasserstoff, ein gegebenenfalls substituierter Alkyl-, Cycloalkyl-, Aryl- oder Aralkylrest oder ein Rest der Formel $(CHA_3 - CHA_4 - O)_y - H$

$A_3$ Wasserstoff oder ein Alkylrest mit 1 - 3 C-Atomen,

$A_4$ Wasserstoff oder ein Alkylrest mit 1 - 3 C-Atomen und

x und y jedes eine ganze Zahl von 1-50 ist;

oder

i) Oxalkylierungsprodukte von Fettaminen der allgemeinen Formel

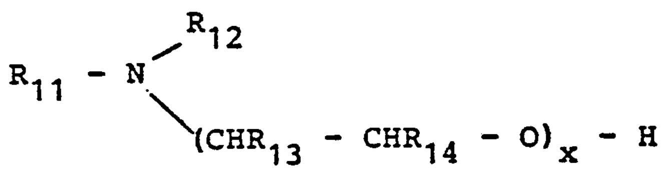

worin

$R_{11}$ ein gesättigter oder ungesättigter, vorzugsweise geradkettiger Alkylrest mit mind. 12 C-Atomen,

$R_{12}$ Wasserstoff, ein gegebenenfalls substituierter Alkyl-, Cycloalkyl-, Aryl- oder Aralkylrest oder ein Rest der Formel $(CHR_3 - CHR_4 - O)_y - H$,

$R_{13}$ Wasserstoff oder Alkylrest mit 1 - 3 C-Atomen,

$R_{14}$ Wasserstoff oder ein Alkylrest mit 1 - 3 C-Atomen und

x und y jedes eine ganze Zahl von 1-50 ist.

Zur Erläuterung der Verbindungsklassen e) - i) seien im folgenden die Oxalkylierungsprodukte aus

1 Mol Dodecylamin und 10 Molen Propylenoxid
1 " Hexadecylamin " 10 " Ethylenoxid
1 " Oktadecylamin " 10 " Ethylenoxid
1 " Oktadecylamin " 5 " Propylenoxid
1 " Oktadecylamin " 20 " Ethylenoxid
1 " Oktadecylamin " 10 " Butylenoxid
1 " N-Methyl-oktadecylamin " 10 " Ethylenoxid
1 " N-Cyclohexyl-oktadecylamin " 10 " Ethylenoxid
1 " N-Cyanethyl-oktadecylamin " 10 " Ethylenoxid
1 " N,N-Bis-(oktadecyl)-amin " 20 " Ethylenoxid
1 " Eikoxylamin " 10 " Ethylenoxid
1 " Hexadecylalkohol " 5 " Propylenoxid
1 " Oktadecylalkohol " 10 " Ethylenoxid
1 " Palmitinsäure " 10 " Ethylenoxid
1 " Stearinsäure " 5 " Ethylenoxid
1 " Stearinsäure " 10 " Propylenoxid
1 " Stearinsäure " 20 " Propylenoxid
1 " Behensäure " 10 " Ethylenoxid
1 " Ölsäure " 10 " Ethylenoxid
1 " Linolsäure " 10 " Ethylenoxid
1 " p-Nonyl-phenol " 5 " Ethylenoxid
1 " p-Nonyl-phenol " 30 " Ethylenoxid
1 " m-Pentadecyl-phenol " 20 " Propylenoxid
1 " m-Pentadecyl-phenol " 10 " Ethylenoxid
1 " p-Dodecyl-phenol " 20 " Ethylenoxid
1 " Kokosfettsäureamid " 2 " Ethylenoxid
1 " Stearinsäureamid " 5 " Ethylenoxid
1 " Stearinsäure-N-methyl-amid " 5 " Ethylenoxid
1 " Behensäureamid " 10 " Ethylenoxid
1 " Ölsäureamid " 5 " Ethylenoxid

als Beispiele genannt.

Die Dispersion wird durch übliche Methoden, z.B. durch Mischen der beiden Komponenten mittels Rührer oder Dissolver, und anschließende Aufbereitung der Mischung zu einer stabilen Dispersion hergestellt. Die Aufbereitung erfolgt entweder mit einer Naßmühle, z.B. einer Rührwerksmühle, einer Kugelmühle, einer Korundscheibenmühle, einer Zahnkolloidmühle, einem Ultra-Turrax (R)-Dispergiergerät, einer Schwingmühle oder mit einem Ein-oder Mehrwalzenstuhl.

Die Dispersion wird vorzugsweise dem Polyamidgranulat unter Verwendung üblicher Mischgeräte, z.B. Doppelkonusmischer, Schnellmischer, Schneckenmischer, Taumelmischer oder Schaufelradmischer, zugemischt.

Geeignete Polyamide für die Durchführung des erfindungsgemäßen Verfahrens sind neben Polyamid-6 Copolyamide, die durch Polykondensation bzw. Polymerisation von mindestens

80 Gew.-% ,ε-Caprolactam und höchstens
20 Gew.-% eines oder mehrerer anderer polyamidbildender
Ausgangsstoffe
erhalten werden.

Beispiele für solche polyamidbildenden Ausgangsstoffe sind weitere Lactame, wie Laurinlactam, ω-Aminosäuren, wie 11-Aminoundekansäure, sowie Mischungen aus äquivalenten Mengen einer oder mehrerer Dicarbonsäuren, wie z.B. Adipinsäure, Sebazinsäure, Azelainsäure, Isophthalsäure oder Terephthalsäure, und eines oder mehrerer Diamine wie z.B. Hexamethylendiamin, 3-Amino-methyl-3,5,5-trimethylcyclohexylamin, 4,4'-Diamino-dicyclohexylmethan, 4,4'-Diaminodicyclohexylpropan-(2,2), m-Xylylendiamin, 2,2,4-Trimethylhexamethylendiamin oder 2,4,4-Trimethylhexamethylendiamin. Die relative Viskosität der Polyamide, gemessen an der 1%igen Polymer-Lösung in m-Kresol bei 25°C, sollte mindestens 3,2, vorzugsweise mindestens 3,4 betragen.

Die Polyamide werden auf übliche Weise durch hydrolytische oder aktivierte, anionische Polymerisation der Monomeren in diskontinuierlich oder kontinuierlich arbeitenden Apparaturen, z.B. Autoklaven oder VK-Rohren, hergestellt. Ein Restgehalt an Monomeren und/oder Oligomeren kann gegebenenfalls durch Vakuumdestillation oder Polyamidschmelze oder durch Extraktion des aus der Polyamidschmelze gewonnen Granulats, z.B. mit heißem Wasser, entfernt werden.

Durch Nachkondensation des Polyamid-Granulates im festen Zustand bei Temperaturen von 1 - 100°C, vorzugsweise 5 - 50°C, unterhalb des Schmelzpunktes des Polyamids, kann die relative Viskosität auf den gewünschten Endwert angehoben werden.

Für die Herstellung der Folien eignen sich vorzugsweise die übliche Einwellenextruder mit eingängigen 3-Zonen-Schnecken oder Hochleistungsschnecken, die mit Scher- und Mischelementen bestückt sind. Die Gesamtlänge der Schnecke sollte mindestens 20 D (= Durchmesser), vorzugsweise mindestens 24 D betragen. Die Verarbeitungstemperatur kann zwischen 200°C und 300°C, vorzugsweise zwischen 250°C und 280°C, betragen.

Der durch eine übliche Breitschlitzdüse extrudierte Film wird von einer gekühlten Gießwalze übernommen, wo er erstarrt und sich verfestigt und anschließend mit einer Abzugsgeschwindigkeit von mehr als 50 m/min als Folie über Umlenkwalzen zur Aufwicklung oder Weiterverarbeitung transportiert. Die Temperatur der Gießwalze beträgt 80 - 130°C und richtet sich nach der Dicke der Folie.

Das erfindungsgemäße Verfahren ermöglicht die Herstellung extrem dünner Folien mit einer Dicke von 10 - 50 μm, vorzugsweise 15 - 25 μm, bei gleichzeitiger hoher Abzugsgeschwindigkeit oberhalb 50 bis zu 180 m/min, vorzugsweise 80 - 150 m/min. Die auf diese Weise hergestellten dünnen Folien zeichnen sich durch eine gute Planlage, geringe Klebeneigung auf der Gießalze, Bahnzugstabilität bei der späteren Weiterverarbeitung, z.B. beim Kaschieren oder Bedrucken, und außergewöhnliche Dimensionsstabilität bei der Zwischenlagerung aus. Außerdem besitzen sie eine hohe Transparenz und einen hohen Oberflächenglanz.

Folgende Mischungen wurden unter Verwendung eines üblichen Doppelkonusmischers hergestellt:

Mischung A: 99,975 Gew.-% Poly- ε-caprolactam mit einer relativen Viskosität von 3,55 (gemessen wie oben beschrieben) in Form eines üblichen Zylindergranulates, 0,025 Gew.-% einer Dispersion, bestehend aus 20 Gew.-% eines Talkums mit einer Teilchengröße unterhalb 10 μm und 80 Gew.-% eines Polydimethylsiloxans mit einer Viskosität von 440 mpa.s bei 20°, hergestellt unter Verwendung eines üblichen Einwalzenstuhles.

Mischung B: 99,97 Gew.-% Poly- ε-caprolactam wie in Mischung A, 0,03 Gew.-% einer Dispersion, bestehend aus 35 Gew.-% eines Talkums mit einer Teilchengröße unterhalb 10 μm und 65 Gew.-% eines Polyethylenglykols mit dem mittleren Molekulargewicht 400, hergestellt unter Verwendung einer Rührwerkskugelmühle.

Mischung C: 99,96 Gew.-% Poly- ε-caprolactam wie in Mischung A, 0,04 Gew.-% einer Dispersion, bestehend aus 25 Gew.-% eines Talkums mit einer Teilchengröße unterhalb 10 μm und 75 Gew.-% Isodecylstearat, hergestellt unter Verwendung einer Rührwerkskugelmühle.

Mischung D: 99,96 Gew.-% Poly- ε-caprolactam wie in Mischung A, 0,04 Gew.-% einer Dispersion, bestehend aus 25 Gew.-% eines Talkums mit einer Teilchengröße unterhalb 10 μm und 75 Gew.-% eines oxethylierten Stearylamins, hergestellt unter Verwendung einer Schwingmühle.

Mischung E: 99,95 Gew.-% Poly- ε-caprolactam wie in Mischung A, 0,05 Gew.-% einer Dispersion, bestehend aus 20 Gew.-% eines Talkums mit einer Teilchengröße unterhalb 10 μm und 80 Gew.-% eines Paraffinöls mit einer Viskosität von 37,8 / 5,05 c St/E bei 20°C, hergestellt unter Verwendung einer Schwingmühle.

Mischung F: 99,96 Gew.-% Poly-ε-caprolactam wie in Mischung A, 0,04 Gew.-% einer Dispersion, bestehend

aus 25 Gew.-% eines Talkums mit einer Teilchengröße unterhalb 10 µm und 75 Gew.-% Diisononyladipat, hergestellt unter Verwendung eines Ultraturrax(R)-Mischers.

Mischung G: 99,95 Gew.-% Poly-ε-caprolactam wie in Mischung A, 005 Gew.-% einer Dispersion, bestehend aus Gew.-% eines Talkums mit einer Teilchengröße unterhalb 10 µm und 80 Gew.-% des Oxalkylierungsproduktes aus einem $C_{12}$ - $C_{18}$ - Fettalkohol und Ethylenoxid (Molverhältnis 1 : 5), hergestellt unter Verwendung einer Rührwerkskugelmühle.

Mischung H: 99,95 Gew.-% Poly-ε-caprolactam wie in Mischung A, 0,05 Gew.-% einer Dispersion, bestehend aus 20 Gew.-% eines Talkums mit einer Teilchengröße unterhalb 10 µm und 80 Gew.-% des Oxalkylierungsproduktes aus p-Nonylphenol und Ethylenoxid (Molverhältnis 1 : 8), hergestellt unter Verwendung einer Rührwerkskugelmühle.

Mischung I: 99,95 Gew.-% Poly-ε-caprolactam wie in Mischung A, 0,05 Gew.-% einer Dispersion, bestehend aus 20 Gew.-% eines Talkums mit einer Teilchengröße unterhalb 10 um und 80 Gew.-% des Oxalkylierungsproduktes aus Kokosfettsäureamid und Ethylenoxid Maolverhältnis 1:6), hergestellt unter Verwendung einer Rührwerkskugelmühle.

Mischung K: 99,94 Gew.-% Poly- ε-caprolactam wie in Mischung A, 0,06 Gew.-% einer Dispersion, bestehend aus 25 Gew.-% Calciumfluorid mit einer Teilchengröße unterhalb 15 µm und 75 Gew.-% eines Polyethylenglykols mit dem mittleren Molekulargewicht 400, hergestellt unter Verwendung einer Rührwerkskugelmühle.

**Beispiel 1**

Mit einem durch folgende Daten gekennzeichneten Einwellenextruder wurden aus den Mischungen A - K Flachfolien hergestellt;

Durchmesser (D): 4 1/2 Zoll
Länge: 28 D
Schnecke: 9 D Einzugszone, 4 D Kompressionszone,
11 D 1. Meteringzone, 2·D Mischteil
2 D 2. Meteringzone.
Breite der Breitschlitzdüse (Bauart Johnson): 1550 mm Temperaturen der Zylinder - Heizungen, beginnend von der Einzugszone.
250° C, 260° C, 265° C, 265° C.
Adapter und Breitschlitzdüse: 260° C
Schneckendrehzahl: 40 U/min.

Bei einer Abzugsgeschwindigkeit von 100 m/min ließen sich Folien von 17 µm Dicke einwandfrei abziehen und aufwickeln. Die Folien waren hochtransparent und besaßen eine brillante Oberfläche. Die Folienwickel wiesen auch nach längerer Lagerzeit keine Faltenbildung auf.

**Beispiel 2**

Mit einem durch folgende Daten gekennzeichneten Einwellenextruder wurden aus den Mischungen A - K Flachfolien hergestellt:

Durchmesser (D): 90 mm
Länge: 30 D
Schnecke: 10 D Einzugszone, 4 D Kompressionszone,
10 D 1. Meteringzone, 0,5 D Mischteil, 5,5 D 2. Meteringszone.
Breite der Breitschlitzdüse (Bauart Johnson): 1550 mm Temperaturen der Zylinder - Heizungen, beginnend von der Einzugszone.
200° C, 260° C, 260° C. 260° C.
Adapter und Breitschlitzdüse: 255° C
Schneckendrehzahl: 94 U/min.

Bei einer Abzugsgeschwindigkeit von 150 m/min ließen sich Folien von 15 µm Dicke einwandfrei abziehen und aufwickeln. Die Folien waren hochtransparent und besaßen eine brillante Oberfläche. Die Folienwickel wiesen auch nach langerer Lagerzeit keine Faltenbildung auf.

**Patentansprüche**

1. Verfahren zur Herstellung von Polyamidfolien mit einer Dicke von 10 - 50 µm nach dem Folienextrusionsverfahren mit einer Abzugsgeschwindigkeit oberhalb 50 m/min, dadurch gekennzeichnet, daß man Polyamid-6 oder Copolyamide, die zumindest aus 80 Gew.-% ε-Caprolactameinheiten bestehen, mit 0,001 -

0,2 Gew.-%, bezogen auf das Polyamid einer Dispersion mischt, die aus

1) 1 - 50 Gew.-%, bezogen auf die Gesamtdispersion, mindestens eines festen anorganischen Nucleierungsmittels für Polyamide mit einer Teilchengröße < 25 µm und aus

2) 50 - 99 Gew.-%, bezogen auf die Gesamtdispersion, mindestens eines flüssigen, für das Nucleierungsmittel geeigneten organischen Dispergiermittels aus der Gruppe Polyalkylenglykole, Paraffinöle, Carbonsäureester, Organopolysiloxane, oxalkylierte Fettalkohole, oxalkylierte Alkylphenole, oxalkylierte Fettsäuren, oxalkylierte Fettsäureamide und oxalkylierte Fettamine besteht.

2. Verfahren nach Anspruch 1, dadurch gekennzeichnet, daß als Dispergiermittel

a) Polyalkylenglykole der allgemeinen Formel

$$HO-\left[-CH_2-\underset{\displaystyle R}{\overset{}{CH}}-O-\right]_n-H \quad ,$$

in der

R = H oder $-CH_3$ und

n eine ganze Zahl von 3-100

bedeuten;

b) Paraffinöle oder

c) Ester aus Mono- oder Dicarbonsäuren und monofunktionellen Alkoholen der allgemeinen Formel

$R_1-CO-O\,R_2$

oder

$$R_3-O-\overset{\displaystyle O}{\overset{\|}{C}}-R_4-\overset{\displaystyle O}{\overset{\|}{C}}-O-R_5$$

worin

$R_1$, $R_2$, $R_3$ und $R_5$ gesättigte oder ungesättigte Alkylreste mit vorzugsweise 1-20 C-Atomen, Cycloalkylreste mit vorzugsweise 5-6 C-Atomen, Arylreste mit vorzugsweise 6-10 C-Atomen, oder Aralkylreste mit vorzugsweise 7-12 C-Atomen,

$R_4$ ein gesättigter oder ungesättigter Alkylenrest mit vorzugsweise 2-10 C-Atomen, Cycloalkylenrest mit vorzugsweise 6-10 C-Atomen oder Arylenrest mit vorzugsweise 6-10 C-Atomen sind,

wobei $R_1$ und/oder $R_2$ bzw. $R_3$ und/oder $R_5$ mindestens 8 miteinander verbundene aliphatische C-Atome enthalten;

d) lineare Organopolysiloxane der allgemeinen Formel

$$R_7-\underset{\displaystyle R_8}{\overset{\displaystyle R_6}{Si}}-O-\left[-\underset{\displaystyle R_{10}}{\overset{\displaystyle R_9}{Si}}-O-\right]_n-\underset{\displaystyle R_8}{\overset{\displaystyle R_6}{Si}}-R_7 \quad ,$$

in der

$R_6$, $R_7$, $R_8$, $R_9$, $R_{10}$ jedes H, einen Alkylrest mit vorzugsweise 1 - 18 C-Atomen, Cycloalkylrest mit vorzugsweise 6 - 10 C-Atomen oder Arylrest mit vorzugsweise 6 - 10 C-Atomen und n eine ganze Zahl von 5-1000 bedeuten;

e) Oxalkylierungsprodukte von Fettalkoholen der allgemeinen Formel

$X_1-O-(CHX_2-CHX_3-O)_x-H$

worin

$X_1$ ein gesättigter oder ungesättigter, vorzugsweise geradkettiger Alkylrest mit mindestens 12 C-Atomen,

$X_2$ Wasserstoff oder ein Alkylrest mit 1-3 C-Atomen,

$X_3$ Wasserstoff oder ein Alkylrest mit 1-3 C-Atomen und

x eine ganze Zahl von 1-50 ist;

f) Oxalkylierungsprodukte von Fettsäuren der allgemeinen Formel

$Y_1-CO-O-(CHY_2-CHY_3-O)_x-H$

worin

$Y_1$ ein gesättigter oder ungesättigter, vorzugsweise geradkettiger Alkylrest mit mindestens 12 C-Atomen, $Y_2$

ein (Wasserstoff oder ein Alkylrest mit 1-3 C-Atomen,
$Y_3$ Wasserstoff oder ein Alkylrest mit 1-3 C-Atomen und
x eine ganze Zahl von 1-50 ist;
Oxalkylierungsprodukte von Alkylphenolen der allgemeinen Formel

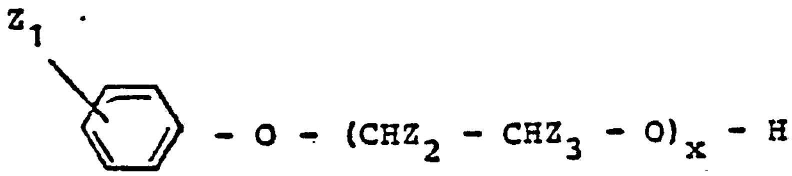

worin
$Z_1$ ein gesättigter oder ungesättigter Alkylrest mit mindestens 9 C-Atomen,
$Z_2$ Wasserstoff oder ein Alkylrest mit 1-3 C-Atomen,
$Z_3$ Wasserstoff oder ein Alkylrest mit 1-3 C-Atomen und
x eine ganze Zahl von 1-50 ist;
h) Oxalkylierungsprodukte von Fettsäureamiden der allgemeinen Formel

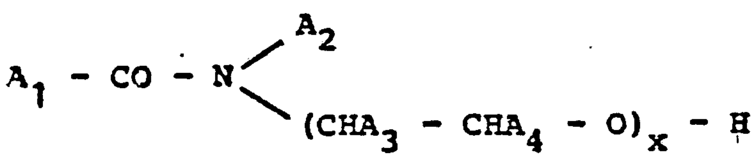

worin
$A_1$ ein gesättigter oder ungesättigter, vorzugsweise geradkettiger Alkylrest mit mindestens 12 C-Atomen,
$A_2$ Wasserstoff, ein gegebenenfalls substituierter Alkyl-, Cycloalkyl-, Aryl- oder Aralkylrest oder ein Rest der Formel
$(CHA_3 - CHA_4 - O)_y - H$,
$A_3$ Wasserstoff oder ein Alkylrest mit 1-3 C-Atomen,
$A_4$ Wasserstoff oder ein Alkylrest mit 1-3 C-Atomen und
x und y jedes eine ganze Zahl von 1-50 ist;
oder
i) Oxalkylierungsprodukte von Fettaminen der allgemeinen Formel

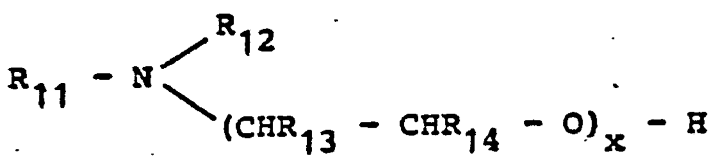

worin
$R_{11}$ ein gesättigter oder ungesättigter, vorzugsweise geradkettiger Alkylrest mit mindestens 12 C-Atomen,
$R_{12}$ Wasserstoff, ein gegebenenfalls substituierter Alkyl-, Cycloalkyl-, Aryl- oder Aralkylrest oder ein Rest der Formel
$(CHR_3 - CHR_4 - =)_y - H$,
$R_{13}$ Wasserstoff oder Alkylrest mit 1-3 C-Atomen,
$R_{14}$ Wasserstoff oder ein Alkylrest mit 1-3 C-Atomen und
x und y jedes eine ganze Zahl von 1-50 ist,
verwendet werden.

3. Verfahren nach Anspruch 1 oder 2, dadurch gekennzeichnet, daß 0,002 bis 0,1 Gew.-% der Dispersion mit dem Polyamid vermischt werden.

Verfahren nach Ansprüchen 1 bis 3, dadurch gekennzeichnet, daß Polyamidgranulat mit der Dispersion vermischt wird.

5. Verfahren nach Ansprüchen 1 bis 4, dadurch gekennzeichnet, daß die Dispersion aus 2 - 40 Gew.-% der Komponente 1, und 60 - 98 Gew.-% der Komponente 2, besteht.

6. Verfahren nach Ansprüchen 1 bis 5, dadurch gekennzeichnet, daß als Nucleierungsmittel Bariumsulfat, Tricalciumphosphat, $CaF_2$ und Talkum verwendet werden.

7. Polyamidfolien erhalten nach verfahren nach Ansprüchen 1 bis 6.

**Claims**

1. Process for the production of polyamide films having a thickness of 10 - 50 µm by the film extrusion process at a draw-off rate of more than 50 m/min, characterised in that polyamide-6 or copolyamides which consist of at least 80% by weight of ε-caprolactam units are mixed with 0.001 - 0.2% by weight, based on the polyamide, of a dispersion consisting of

1) 1 - 50% by weight, based on the total dispersion, of at least one solid inorganic nucleating agent for polyamides having a particle size of < 25 µm and of

2) 50 - 99% by weight, based on the total dispersion, of at least one liquid organic dispersing agent, suitable for the nucleating agent, from the group comprising polyalkylene glycols, paraffin oils, carboxylic acid esters, ordanopolysiloxanes, alkoxylated fatty alcohols, alkoxylated alkyl phenols, alkoxylated fatty acids, alkoxylated fatty acid amides and alkoxylated fatty amines.

2. Process according to Claim 1, characterised in that

a) polyalkylene glycols of the general formula

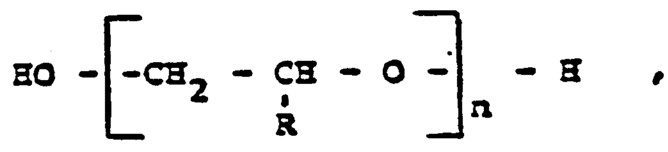

in which

R denotes H or $-CH_3$ and

n denotes an integer from 3-100;

b) paraffin oils or

c) esters of mono- or dicarboxylic acids and monofunctional alcohols of the general formula

$R_1 - CO - O - R_2$

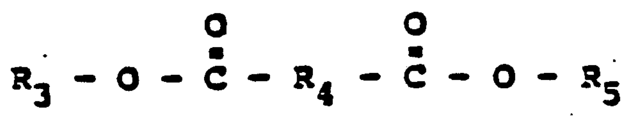

wherein

$R_1$, $R_2$, $R_3$ and $R_5$ are saturated or unsaturated alkyl radicals with preferably 1-20 C atoms, cycloalkyl radicals with preferably 5-6 C atoms, aryl radicals with preferably 6-10 C atoms, or aralkyl radicals with preferably 7-12 C atoms,

$R_4$ is a saturated or unsaturated alkylene radical with preferably 2-10 C atoms, a cycloalkylene radical with preferably 6-10 C atoms or an arylene radical with preferably 6-10 C atoms,

$R_1$ and/or $R_2$ or $R_3$ and/or $R_5$ containing at least 8 aliphatic C atoms linked to one another;

d) linear organopolysiloxanes of the general formula

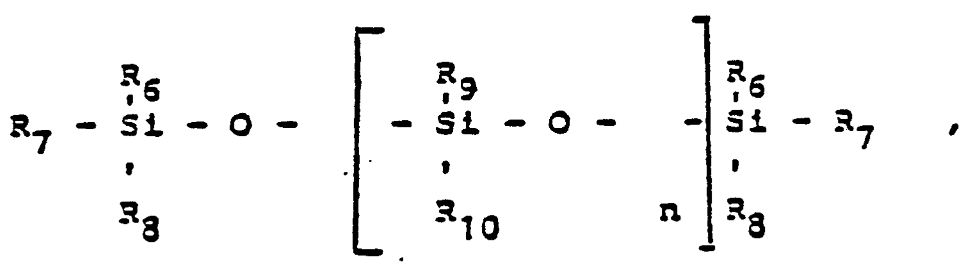

in which

$R_6$, $R_7$, $R_8$, $R_9$ and $R_{10}$ each denote H, an alkyl radical with preferably 1 - 18 C atoms, a cycloalkyl radical eith preferably 6 - 10 C atoms or an aryl radical with preferably 6 - 10 C atoms and

n denotes an integer from 5-1000;

e) alkoxylation products of fatty alcohols of the general formula

$X_1 - O - (CHX_2 - CHX_3 -O)_x - H$

wherein

X is a saturated or unsaturated, preferably straightchain alkyl radical with at least 12 C atoms,

$X_2$ is hydrogen or an alkyl radical with 1-3 C atoms,

$X_3$ is hydrogen or an alkyl radical with 1-3 C atoms and x is an integer from 1-50;,

f) alkoxylation products of fatty acids of the general formula

$Y_1 - CO - O- (CHY_2 - O)_x - H$

wherein

$Y_1$ is a saturated or unsaturated, preferably straightchain alkyl radical with at least 12 C atoms,
$Y_2$ is a hydrogen or an alkyl radical with 1-3 C atoms,
$Y_3$ is hydrogen or an alkyl radical with 1-3 C atoms and
x is an integer from 1-50;
g) alkoxylation products of alkyl phenols of the general Formula

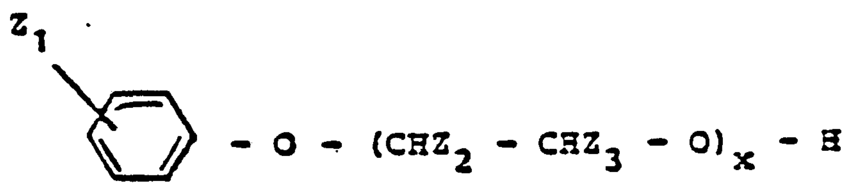

wherein
$Z_1$ is a saturated or unsaturated alkyl radical with at least 9 C atoms,
$Z_2$ is hydrogen or an alkyl radical with 1-3 C atoms,
$Z_3$ is hydrogen or an alkyl radical with 1-3 C atoms and x is an integer from 1-50;
h) alkoxylation products of fatty acid amides of the general formula

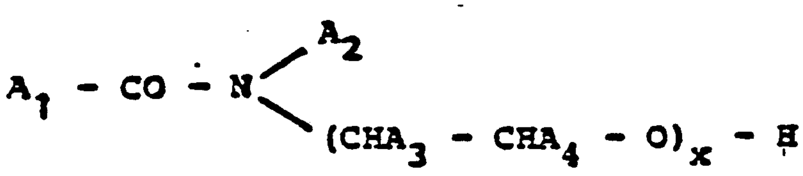

wherein
$A_1$ is a saturated or unsaturated, preferably straight-chain alkyl radical with at least 12 C atoms,
$A_2$ is hydrogen, an optionally substituted alkyl, cycloalkyl, aryl or aralkyl radical or a radical of the formula $(CHA_3 - CHA_4 - O)_y - H$,
$A_3$ is hydrogen or an alkyl radical with 1-3 C atoms,
$A_4$ is hydrogen or an alkyl radical with 1-3 C atoms and
x and y are each an integer from 1-50;
or
i) alkoxylation products of fatty amines of the general formula

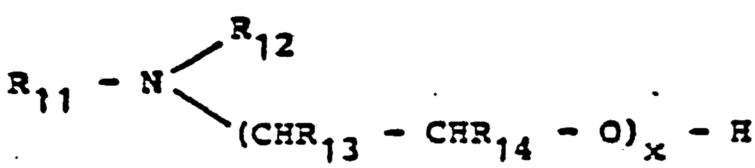

wherein
$R_{11}$ is a saturated or unsaturated, preferably straight-chain alkyl radical with at least 12 C atoms,
$R_{12}$ is hydrogen, an optionally substituted alkyl, cycloalkyl, aryl or aralkyl radical or a radical of the formula $(CHR_3 - CHR_4 =)_y - H$,
$R_{13}$ is hydrogen or an alkyl radical with 1-3 C atoms,
$R_{14}$ is hydrogen or an alkyl radical with 1-3 C atoms and x and y are each an integer from 1-50, are used as dispersing agents.

3. Process according to Claim 1 or 2, characterised in that 0.002 to 0.1% by weight of the dispersion are mixed with the polyamide.

4. Process according to Claims 1 to 3, characterised in that polyamide granules are mixed with the dispersion.

5. Process according to Claims 1 to 4, characterised in that the dispersion consists of 2 - 40% by weight of component 1 and 60 - 98% by weight of component 2.

6. Process according to Claims 1 to 5, characterised in that barium sulphate, tricalcium phosphate, $CaF_2$ and talcum are used as the nucleating agent.

7. Polyamide films obtained by processes according to Claims 1 to 6.

**Revendications**

1. Procédé de préparation de feuilles de polyamide à une épaisseur de 10 à 50 µm par la technique d'extrusion en feuille à une vitesse d'évacuation supérieure à 50 m/min, caractérisé en ce que l'on mélange du polyamide 6 ou des copolyamides consistant pour au moins 80 % en poids en motifs d'ε-caprolactame, avec 0,001 à 0.2 % en poids, par rapport au polyamide, d'une dispersion consistant en:

1) 1 à 50 % en poids, par rapport à la dispersion totale, d'au moins un agent de nucléation minéral solide pour les polyamides, à une dimension de particules interieure à 25 µm et

2) 50 à 99 % en poids, par rapport à la dispersion totale, d'au moins un milieu de dispersion organique liquide convenant pour l'agent de nucléation, pris dans le groupe des polyalkylèneglycols, des huiles de paraffine, des esters d'acide carboxyliques, des organopolysiloxannes, des alcools gras oxyalkylés, des alkylphénols oxyalkylés, des acides gras oxyalkylés, des amides d'acide gras oxyalkylés et des amines grasses oxyalkylées.

2. Procédé selon la revendication 1, caractérisé en ce que l'un utilise en tant que milieux de dispersion

a) des polyalkylèneglycols de formule générale

$$HO-\left[-CH_2-\underset{R}{\underset{|}{CH}}-O-\right]_n-H,$$

dans laquelle
$R = H$ ou $-CH_3$ et
n est un nombre entier de 3 à 100;

b) des huiles de paraffine ou

c) des esters d'acides mono- ou dicarboxyliques et d'alcools monofonctionnels de formule générale:
$R_1-CO-O-R_2$
ou

$$R_3-O-\overset{O}{\overset{\|}{C}}-R_4-\overset{O}{\overset{\|}{C}}-O-R_5$$

dans lesquelles
$R_1$, $R_2$, $R_3$ et $R_5$ représentent des groupes alkyles saturés ou insaturés contenant de préférence 1 à 10 atomes de carbone, des groupes cycloalyles contenant de préférence 5 ou 6 atomes de carbone, des groupes aryles contenant de préférence 6 à 10 atomes de carbone ou aralkyles contenant de préférence 7 à 12 atomes de carbone,
$R_4$ représente un groupe alkylène saturé ou insaturé contenant de préférence 2 à 10 atomes de carbone, cycloalkylène contenant de préfércnce 6 à 10 atomes de carbone ou arylène contenant de préférence 6 à 10 atomes de carbone,
$R_1$ et/ou $R_2$ et respectivement $R_3$ et/ou $R_5$ contenant au moins 8 atomes de carbone aliphatiques reliés entre eux;

d) des organopolysiloxannes linéaires de formule générale:

$$R_7-\underset{R_8}{\overset{R_6}{Si}}-O-\left[-\underset{R_{10}}{\overset{R_9}{Si}}-O-\right]_n-\underset{R_8}{\overset{R_6}{Si}}-R_7,$$

dans laquelle
$R_6$, $R_7$, $R_8$, $R_9$, $R_{10}$ représentent chacun H, un groupe alkyle contenant de préférence 1 à 18 atomes de carbone, un groupe cycloalkyle contenant de préférence 6 à 10 atomes de carbone ou aryle contenant de préférence 6 à 10 atomes de carbone et
n est un nombre entier de 5 à 1 000;

e) des produits d'oxyalkylation d'alcools gras de formule générale
$X_1-O-(CHX_2-CHX_3-O)_x-H$
dans laquelle
$X_1$ représente un groupe alkyle saturé ou insaturé, de préférence à chaîne droite contenant au moins 12 atomes de carbone,
$X_2$ représente l'hydrogène ou un groupe alkyle en $C_1$-$C_3$,

$X_3$ représente l'hydrogène ou un groupe alkyle en $C_1$-$C_3$, et x est un nombre entier de 1 à 50;
f) des produits d'oxyalkylation d'acides gras de formule générale
$Y_1 - CO - O - (CHY_2 - CHY_3 - O)_x - H$
dans laquelle
$Y_1$ représente un groupe alkyle saturé ou insaturé, de préférence à chaîne droite, contenant au moins 12 atomes de carbone,
$Y_2$ représente l'hydrogène ou un groupe alkyle en $C_1$-$C_3$,
$Y_3$ représente l'hydrogène ou un groupe alkyle en $C_1$-$C_3$, et x est un nombre entier de 1 à 50;
g) des produits d'oxyalkylation d'alkylphénols de formule générale

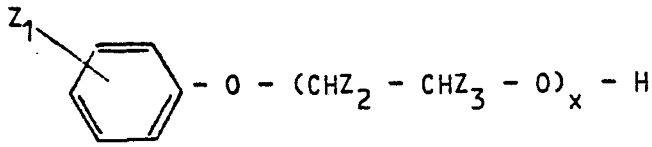

dans laquelle
$Z_1$ représente un groupe alkyle saturé ou insaturé contenant au moins 9 atomes de carbone,
$Z_2$ représente l'hydrogène ou un groupe alkyle en $C_1$-$C_3$,
$Z_3$ représente l'hydrogène ou un groupe alkyle en $C_1$-$C_3$ et x est un nombre entier de 1 à 50;
h) des produits d'oxyalkylation d'amides d'acides gras de formule générale:

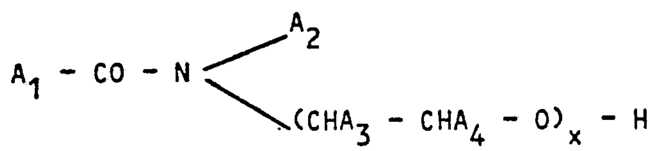

dans laquelle
$A_1$ représente un groupe alkyle saturé ou insaturé, de préférence à chaîne droite, contenant au moins 12 atomes de carbone,
$A_2$ représente l'hydrogène, un groupe alkyle, cycloalkyle, aryle ou aralkyle éventuellement substitué ou un groupe de formule $(CHA_3\text{-}CHA_4 - O)_y - H$,
$A_3$ représente l'hydrogène ou un groupe alkyle en $C_1$-$C_3$,
$A_4$ représente l'hydrogène ou un groupe alkyle en $C_1$-$C_3$, et x et y représentent chacun un nombre entier de 1 à 50;
ou bien
i) des produits d'oxyalkylaticn d'amines grasses de formule générale

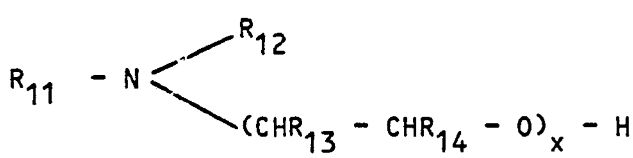

dans laquelle
$R_{11}$ représente un groupe alkyle saturé ou insaturé, de préférence à chaîne droite, contenant au moins 12 atomes de carbone,
$R_{12}$ représente l'hydrogène, un groupe alkyle, cycloalkyle, aryle ou aralkyle éventuellement substitué ou un groupe de formule
$(CHR_3 - CHR_4 - O)_y - H$,
$R_{13}$ représente l'hydrogène ou un groupe alkyle en $C_1$-$C_3$,
$R_{14}$ représente l'hydrogène ou un groupe alkyle en $C_1$-$C_3$, et x et y représentent chacun un nombre entier de 1 à 50.

3. Procédé selon la revendication 1 ou 2, caractérisé en ce que l'on mélange de 0,002 à 0,1 % en poids de la dispersion avec le polyamide.

4. Procédé selon les revendications 1 à 3, caractérisé en ce que l'on mélange des granulés du polyamide avec la dispersion.

5. Procédé selon les revendications 1 à 4, caractérisé en ce que la dispersion consiste en 2 à 40 % en poids du composant 1 et 60 à 98 % en poids du composant 2.

6. Procédé selon les revendications 1 à 5, caractérisé en ce que l'on utilise en tant qu'agents de nucléation le sulfate de baryum, le phosphate tricalcique, $CaF_2$ et le talc.

7. Feuilles de polyamides obtenues par un procédé selon les revendications 1 à 6.